# EUROPEAN PATENT APPLICATION

(11) **EP 1 243 962 A2**
(43) Date of publication of application: **25.09.2002**
(21) Application number: 02290691.1
(22) Date of filing: 19.03.2002
(51) Int. Cl.: G02F 1/01, G02B 6/16

(54) **Wavelength tunable reflector and methods**

(30) Priority: 19.03.2001 US 276513 P; 04.09.2001 US 944381
(71) Applicant: BTI Photonics Inc., Ottawa, Ontario K1G 6C9 (CA)
(72) Inventor: So, Vincent, Ottawa, Ontario K1N 8A1 (CA); Fuh, Andy, Mississauga, Ontario L5C 3R9 (CA); Tam, Robin, Thornhill, Ontario L4J 6N8 (CA); Li, Feng, Ottawa, Ontario K1G 3N9 (CA); Kazakevitch, Anna, Ottawa, Ontario K1G 4A7 (CA)
(74) Representative: Jacobson, Claude

(57) **Abstract**

A novel wavelength tunable reflector (10) and method are demonstrated. The wavelength tunable reflector comprises a birefringent material that may be a cholesteric liquid crystal with a helical structure that forms a phase grating. An optical transmission medium (OTM) (20) is juxtaposed to the birefringent material (80) such that a component of an evanescent field of an optical signal propagating through the OTM (20) is perturbed by the phase grating. The period of the grating is tuned in at least one portion of the birefringent material by applying AC voltages across respective portion(s) of the birefringent material (80) such that one or more channel of the optical signal, each having a specific center wavelength, are reflected. The wavelength tunable reflector is adapted for other applications such as wavelength selective add/drop multiplexers, wavelength selective variable optical attenuators, broadband spectrum equalization filters, gain flattening filters for optical amplifiers and re-configurable dispersion compensators.

## Description

### Related Applications

This application claims the benefit of US Provisional Patent Application Serial No. 60/276513 filed March 19, 2001.

### Field of the Invention

The present invention relates to optical reflectors in optical communications networks. In particular, the invention relates to wavelength tunable reflectors.

### Background of the Invention

Optical fibers are being used with increasing regularity for the transmission and processing of optical signals. Dense wavelength division multiplexing (DWDM) enables an individual optical fiber to transmit multiple channels simultaneously, the channels being distinguished by their center wavelengths. A need exists for wavelength sensitive reflectors that can be used as components of optical fiber systems. Such devices are disclosed in US Patent No. 4,400,056 ("Evanescent-Wave Fiber Reflector", August 23, 1983, Cielo) and No. 4,986,624 ("Optical Fiber Evanescent Grating Reflector", January 22, 1991, Serin, et al). A grating is developed on a photoresist deposited on the etched cladding of an optical fiber or a periodic grating structure is placed on a facing surface formed on the optical fiber. In either case the grating is positioned to interact with a portion of the evanescent field of an optical signal propagating through the optical fiber. In both patents the spatial period of the grating structure is selected to be equal to one-half the propagation wavelength of the optical signal. The grating structure causes an optical signal to be reflected at an angle of 180 degrees and thus to propagate in a direction opposite from its original direction of propagation.

Other constructions of optical reflectors known as Bragg filters are gaining popularity. One type of Bragg filter is incorporated or embedded in the core of an optical fiber by a method disclosed, for instance in US Patent No. 4,807,950 ("Method for Impressing Gratings Within Fiber Optics", February 28, 1989, Glenn, et al.). As is discussed in this patent, permanent periodic gratings can be provided or impressed in the core of an optical fiber by exposing the core through the cladding to an interference pattern of two coherent beams of ultraviolet light that are directed against the optical fiber symmetrically to a plane normal to the fiber axis. This results in a situation where the material of the fiber core has permanent periodic variations in its refractive index impressed therein by the action of the interfering ultraviolet light beams. The periodic variations in the refractive index oriented normal to the fiber axis, constitutes the Bragg grating. Embedded Bragg gratings of this kind reflect light launched into the fiber core for guided propagation at wavelengths within a very narrow band which depends on the period of the grating element. The light is reflected back along the fiber axis in a direction opposite the original direction of propagation. Light at wavelengths outside the narrow band, continues to travel down the fiber with no attenuation. In effect, this type of grating creates a narrow notch in the transmission spectrum, and by the same token a similarly narrow peak in the reflection spectrum. Further developments have been disclosed in US Patent No. 5,007,705 ("Variable Optical Fiber Bragg Filter Arrangement", April 16, 1991, Morey, et al.) relating to different aspects or uses of these discovered principles. In this patent various means are disclosed for intentionally shifting the reflection wavelength response of a Bragg grating. By deliberately varying the period of the grating or altering the index of refraction in a predetermined manner, a variable light filtering element is provided. This is achieved by applying, in a controlled manner, external forces or actions on the fiber section containing the grating.

US Patent No. 5,446,809 ("All Fiber Wavelength Selective Optical Switch", August 29, 1995, Fritz, et al.) discloses an optical wavelength selective optical switch, utilizing tunable Bragg fiber gratings. The fiber wavelength selective switch has one or more 1xN input optical couplers and utilizes a plurality of in-line Bragg fiber gratings in series along multiple parallel paths. For a given wavelength of light to pass through a particular grating, the grating must be detuned. By providing a plurality of Bragg gratings in series, each designed to reflect a different wavelength, and having means for controlling or shifting the response of each grating individually, signals can be selectively passed through a fiber or can be reflected backwards in a binary on-off fashion. The non-binary response version is disclosed in US Patent No. 5,699,468 ("Bragg Grating Variable Optical Attenuator", December 16, 1997, Farries, et al.).

As seen in US Patent No. 6,188,462 ("Diffraction Grating with Electrically Controlled Periodicity", February 13, 2001, Lavrentovich, et al.) birefringent materials have been used to provide a variable index of refraction throughout the birefringent material with a period which can be tuned. In this case the birefringent material is used as a diffraction grating for an optical signal propagating through the birefringent material.

### Summary of the Invention

Wavelength tunable reflectors and methods are provided. The wavelength tunable reflector comprises a birefringent material that may be a cholesteric liquid crystal with a helical structure that forms a phase grating. An optical transmission medium (OTM) is juxtaposed to the birefringent material such that a portion of an evanescent field of an optical signal propagating through the OTM is perturbed by the phase grating. The period of the grating is tuned in at least one portion of the birefringent material by applying voltages across respective portion(s) of the birefringent material such that one or more channel(s) of the optical signal, each having a specific wavelength, is(are) reflected. The wavelength tunable reflector is adapted for other applications such as wavelength selective add/drop multiplexers, wavelength selective variable optical attenuators, broadband spectrum equalization filters, gain flattening filters for optical amplifiers and re-configurable dispersion compensators.

In accordance with a first broad aspect of the invention, provided is a wavelength tunable reflector. The wavelength tunable reflector includes an optical transmission medium (OTM). The wavelength tunable reflector also includes a birefringent material juxtaposed to a portion of the OTM. Juxtaposing the birefringent material to a portion of the OTM allows an evansecent field of an optical signal to interact with the birefringent material. The birefringent material has a tunable periodic variation in a refractive index in at least one portion of the birefringent material. The periodic variation forms a respective grating within each portion of the birefringent material.

Each grating may have a period Λᵢ substantially satisfying a Bragg condition λᵢ = 2n_{eff} Λᵢ where n_{eff} is an effective refractive index. In addition, each grating may be used to cause at least partial reflection of any portion of the optical signal having a center wavelength λᵢ. The OTM may include a core with a refractive index, n_{core}, and the birefringent material may have an extraordinary refractive index, nₑ, and an ordinary refractive index, nₒ, wherein a larger one of nₒ and nₑ is approximately equal to, but slightly less than n_{core}.

Each grating might be a phase grating and may also have a tunable period. The birefringent material might also be a liquid crystal, or more particularly, the birefringent material might be a cholesteric liquid crystal with a helical structure. In such a case, the liquid crystal with its helical structure might have a helical axis which may be perpendicular to a surface of the cholesteric liquid crystal that is adjacent to the portion of the OTM. Furthermore, for each one of the portions of the birefringent material, a voltage applied across the cholesteric liquid crystal may cause the helical axis to re-orient itself parallel to the OTM thereby forming the respective grating. The helical structure that forms respective ones of the gratings may have a pitch length, *p,* that might be dependent on the magnitude of the voltage applied.

The cholesteric liquid crystal may include a dye adapted to absorb light and change a period of the grating.

The wavelength tunable reflector may have a plurality of electrodes that may be used to allow application of a respective voltage across each portion of the birefringent material so as to tune a respective one of the gratings. The electrodes might be arranged in lines of electrodes on opposing faces of the birefringent material. The electrodes may be thinner than the skin depth over which light can penetrate the electrodes allowing the evanescent field of the optical signal propagating through the OTM to interact with the birefringent material. In some embodiments, the electrodes may be transparent comprised of perhaps Indium Tin Oxide (ITO) allowing an evanescent field of the optical signal propagating through the OTM to interact with the birefringent material. The electrodes may be coated with polyimide and the electrodes on one of two opposing faces of the birefringent material may be rubbed unidirectionally perpendicular to the OTM. On the other hand, the electrodes on another one of two opposing faces of the birefringent material may also be rubbed unidirectionally in a parallel but opposite direction. This may be done to provide an in-plane axis of molecular orientation of molecules of the birefringent material.

The wavelength tunable reflector may include a controller that might be used to control the periodic variation of each grating.

A wavelength selective add/drop multiplexer (WSADM) might include the wavelength tunable reflector. Such a WSADM might be used drop at least one channel of one or more channels associated with the optical signal by reflecting the least one channel. The WSADM might also be used to add to the optical signal at least one channel. The added channel(s) might be channel(s) other than channel(s) of the one or more channels of the optical signal which have not been dropped.

The wavelength tunable reflector might be used as a wavelength selective variable optical attenuator. In such an embodiment, a length of the gratings might be adjusted to control the extent to which the any portion of the optical signal is reflected. This might be done to control attenuation of an un-reflected portion of the optical signal.

In another embodiment, a broadband spectrum equalization filter (BSEF) might include the wavelength tunable reflector. In yet another embodiment, a gain flattening filter (GFF) may include the BSEF. In such a case, the GFF might be used to equalize a gain profile of an optical amplifier.

In some embodiments, a re-configurable dispersion compensator (RDC) might include the wavelength tunable reflector. In such a case, the gratings might form a chirped grating. The chirped grating might be adjusted such that Fourier components of a waveform that enter the RDC sequentially in time, due to dispersion effects, may be reflected at different points along the RDC in manner that Fourier components of a reflected waveform may exit the RDC approximately simultaneously to reduce dispersion effects. Alternatively, the Fourier components of the waveform that enters the RDC sequentially in time may be reflected at different points along the RDC such that the Fourier components of the reflected waveform may exit the RDC sequentially in time in a manner as to pre-compensate for dispersion effects further down an optical transmission line.

Another broad aspect of the invention provides a method of reflecting a channel of an optical signal having a plurality of channels of respective center wavelengths. The method includes juxtaposing a portion of an OTM to a birefringent material in a manner such that an evanescent field of the optical signal is perturbed by the birefringent material. The birefringent material has a tunable periodic variation in a refractive index. The tunable periodic variation forms a tunable grating that allows the channel of the optical signal propagating through the OTM to be reflected. The method also includes tuning the tunable grating so as to control the extent to which the channel of the optical signal is reflected.

In juxtaposing a portion of the OTM a portion of a cladding of the OTM may be removed and an exposed core of the OTM might be juxtaposed adjacent to the birefringent material.

The tunable grating might be tuned by matching, at periodic intervals, a greater one of an extraordinary index of refraction, nₑ, and an ordinary index of refraction, nₒ, of the birefringent material with an index of refraction, n_{core}, of the core of the OTM. This method might be used to form the tunable grating. The tunable grating might also be tuned by applying a voltage, across the birefringent material so as to control a period of the periodic intervals. The period of the periodic intervals may be set to reflect distinct ones of the channels of the optical signal. Although in some embodiments, a voltage may be used to control the period in other embodiments the period might be tuned by heating the birefringent material through convection or irradiation.

Yet another broad aspect of the invention provides a method of designing the wavelength tunable reflector. The method comprises selecting at least one channel of an optical signal to be reflected, wherein each channel has a specific center wavelength, λᵢ. For each one of the selected channels of the optical signal, selected is the fraction of the power of the selected channel that is to be reflected. For each one of the selected channels of the optical signal, the length of a respective portion of a grating required to reflect the selected fraction of power of the selected channel is then determined. Finally, for each one of the channels of the optical signal, a period, Λᵢ, of the respective portion of the grating is determined.

The length of a respective portion of the grating may be determined by choosing a plurality of sets of electrodes across which a voltage is applied to reflect the respective channel of the optical signal, with the length being proportional to the number of sets of electrodes.

### Brief Description of the Drawings

Preferred embodiments of the invention will now be described with reference to the attached drawings in which:
Figure 1A is a side sectional view of a wavelength tunable reflector provided by an embodiment of the invention;
Figure 1B is an exploded view of the wavelength tunable reflector of Figure 1A;
Figure 1C is a front sectional view of the wavelength tunable reflector of Figure 1A;
Figure 1D is a side sectional view of the wavelength tunable reflector of Figure 1A including a controller for statically and/or dynamically controlling the wavelength tunable reflector;
Figure 1E is a view of a volume of cholesteric liquid crystal of the wavelength tunable reflector of Figure 1B with an expanded view showing the structure of the cholesteric liquid crystal when no AC voltage is applied across the cholesteric liquid crystal;
Figure 1F is a view of molecules from the cholesteric liquid crystal structure of Figure 1E showing a helical structure;
Figure 1G is a view of the volume of cholesteric liquid crystal of the wavelength tunable reflector of Figure 1B with an expanded view showing the structure of the cholesteric liquid crystal when an AC voltage is applied across the cholesteric liquid crystal;
Figure 1H is a view of molecules from the cholesteric liquid crystal of Figure 1G showing another helical structure;
Figure 2 is a front sectional view of a wavelength tunable reflector, provided by another embodiment of the invention;
Figure 3A is a side sectional view of the wavelength tunable reflector of Figure 1A illustrating wavelength selectivity and reflectivity before reflection of a selected channel of an optical signal;
Figure 3B is a side sectional view of the wavelength tunable reflector of Figure 1A illustrating wavelength selectivity and reflectivity after reflection of the selected channel of the optical signal;
Figure 4 is a schematic block diagram of a wavelength selective add/drop multiplexer provided by an embodiment of the invention;
Figure 5 is a schematic block diagram of a wavelength selective variable optical attenuator provided by an embodiment of the invention;
Figure 6A is a block diagram of a re-configurable dispersion compensator showing an illustrative example of an optical signal with dispersion propagating into the re-configurable dispersion compensator, provided by an embodiment of the invention;
Figure 6B is a block diagram of the re-configurable dispersion compensator of Figure 6A showing an illustrative example of a dispersion corrected reflected optical signal propagating out of the re-configurable dispersion compensator; and
Figure 7 is a flow chart of a method of using a wavelength tunable reflector.

### Detailed Description of the Preferred Embodiments

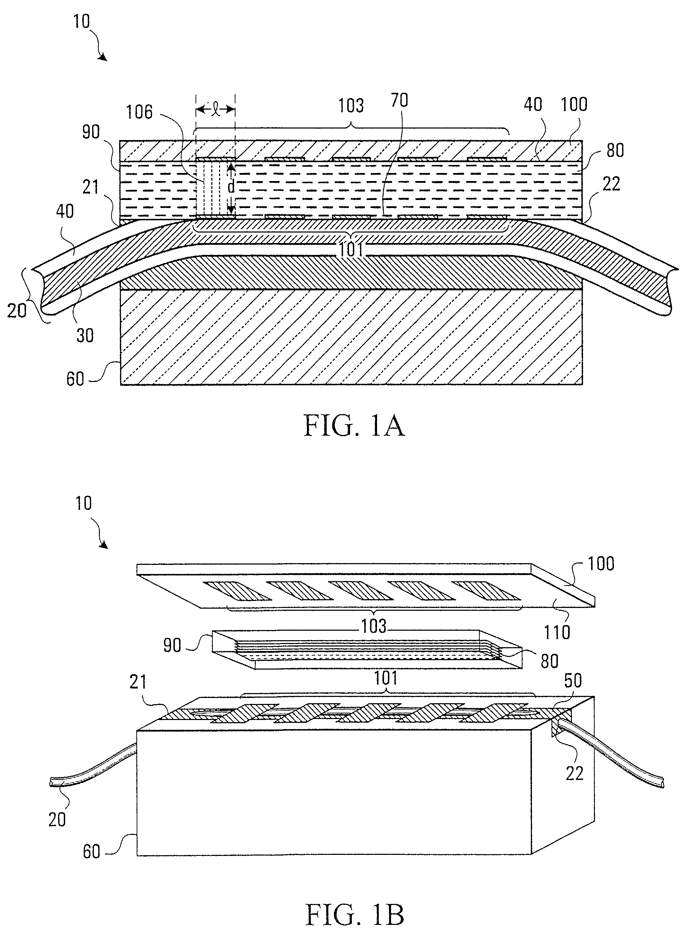

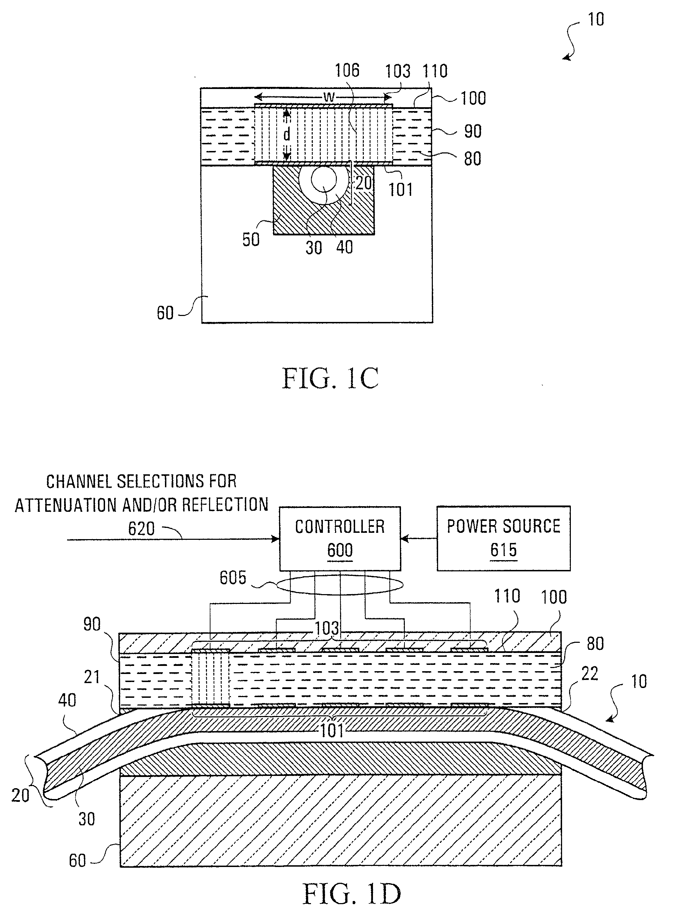

Referring to Figures 1A, 1B and 1C, shown are side-sectional, exploded and front sectional views, respectively, of a wavelength tunable reflector 10, provided by an embodiment of the invention. A portion of an optical fiber 20 is embedded and held fixed in a groove 50 in a glass block 60. In other embodiments, the optical fiber 20 is any suitable optical transmission medium (OTM) such as a waveguide. The optical fiber 20 has a core 30 and cladding 40, and is polished to remove part of its cladding 40 and expose its core 30, as shown at 70 in Figure 1A. The core 30 need not be completely exposed and in other embodiments of the invention, a polished portion of the optical fiber 20 retains a thickness of cladding 40 of a few micrometers or less. An input 21 and an output 22 of the wavelength tunable reflector 10 correspond to the points along the optical fiber 20 where the optical fiber enters and exits the groove 50, respectively. The entire wavelength tunable reflector 10 may also be equipped with optical connectors, at input 21 and output 22, making it a discrete component. A volume 90 of cholesteric liquid crystal 80 is sandwiched between the polished portion of the optical fiber 20 and a glass substrate 100. A portion of the glass block 60 is deposited with a parallel line of electrodes 101. Similarly, a portion of an inner surface 110 of the glass substrate 100 is deposited with a parallel line of electrodes 103. The electrodes preferably all have an equal length, ℓ. In other embodiments of the invention, the electrodes may be of different lengths. In the illustrated embodiment, each line of electrode 101,103 has five electrodes. Any suitable number of electrodes may be used. More electrodes provide extra flexibility at the cost of increased complexity.

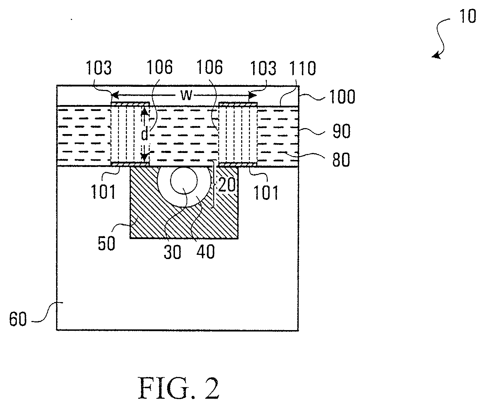

The electrodes are made of Indium Tin oxide (ITO) which is transparent. In other embodiments, the thickness of the lines of electrodes 101,103 is chosen to be smaller than the skin depth over which light can penetrate the electrodes. A suitable thickness may for example be approximately 0.1 µm. In yet other embodiments of the invention, as shown in Figure 2, the lines of electrodes 101,103 are spaced (etched) so as not to cover the core 30 of the optical fiber 20. In all cases, the evanescent field of channels of an optical signal propagating through the optical fiber 20 penetrates the cholesteric liquid crystal 80.

The lines of electrodes 101,103 are used to create one or more electric field(s) in regions of the cholesteric liquid crystal 80 changing the molecular orientation of molecules of the cholesteric liquid crystal 80 in that(those) region(s). The evanescent field of the optical signal propagating through the optical fiber 20 couples to the cholesteric liquid crystal 80 causing at least partial reflection of certain wavelengths as detailed below.

Electrodes of the lines of electrodes 101,103 are set up into groups of two electrodes in a single cross-sectional plane, each group of two electrodes forming a set of electrodes such that electric fields can be set up through proper application of voltages to the lines of electrodes 101,103. For example, an electric field is set up across a set of electrodes by applying a voltage across one electrode in line 101 and another electrode in line 103. In the illustrated example, there are five such sets of electrodes. Preferably, the sets of electrodes are closely spaced. An example of the sets of electrodes is shown in Figures 1A and 1C where a field 106 has been established. Preferably each set of electrodes is addressable individually meaning that individual voltages may be applied across each of the sets of electrodes. For example, a specific AC voltage may be applied across two adjacent sets of electrodes and a different AC voltage may be applied across three other adjacent sets of electrodes resulting in electric fields of distinct magnitude in different portions of the cholesteric liquid crystal 80. Preferably, AC voltages, of the order of a few tens of Hz to KHz, are applied since DC voltages can cause impurities in the cholesteric liquid crystal 80 to move toward a particular line of electrodes (for example, line of electrodes 103). In addition, preferably, a separation, d, between electrodes at opposing faces of the cholesteric liquid crystal 80 is smaller than the length, ℓ, or a width, w, of the electrodes. Keeping the separation, d, between electrodes to a small value reduces fringing effects of electric fields caused by the applied AC voltages.

The cholesteric liquid crystal 80 is a birefringent material which has an index of refraction that is dependent on the molecular orientation of molecules of the cholesterc liquid crystal 80. Birefringent materials are anisotropic and have an ordinary index of refraction, nₒ, and an extraordinary index of refraction, nₑ. In some embodiments of the invention, nₑ > nₒ resulting in positive birefringence whereas in other embodiments nₒ > nₑ resulting in negative birefringence.

More specifically, the cholesteric liquid crystal 80 is preferably a nematic material which has been treated with a chiral agent. The cholesteric liquid crystal 80 may, for example, be prepared by mixing a suitable nematic liquid crystal with the chiral agent (e.g. CB15 from Merck Chemicals) to form cholesteric liquid crystal with a helical structure having a helical axis of pitch length, *p*. Such liquid crystals have been used in liquid crystal display applications and in thermometers.

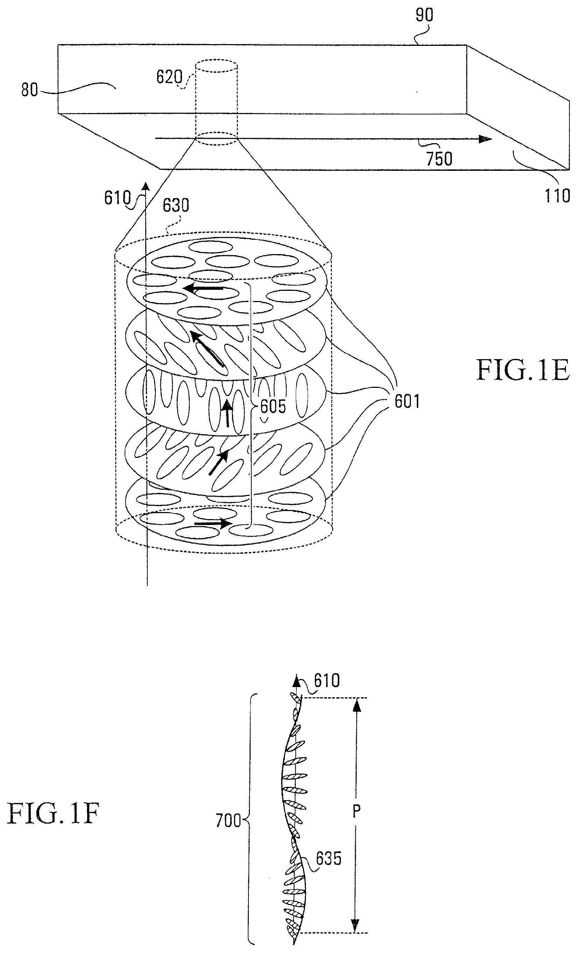

The helical structure is illustrated in Figure 1E. Shown in Figure 1E is a view of the volume 90 of the cholesteric liquid crystal 80 of the wavelength tunable reflector 10 of Figure 1B with an expanded view 630 showing the structure of the cholesteric liquid crystal 80 when no AC voltage is applied across the cholesteric liquid crystal 80. Also shown in Figure 1E is direction 750 which corresponds to the direction of propagation of an optical signal in the core 30. An expanded view 630 of a portion of a cylindrical section 620 through the cholesteric liquid crystal 80 shows five consecutive layers 601 of a continuum of layers formed by the cholesteric liquid crystal 80. Each layer 601 (only five layers are shown) comprises a plurality of molecules having an ellipsoidal shape and lying within the layer. All molecules within any one of the layers 601 have the same orientation. This orientation is illustrated diagramatically with a respective director 605 in each layer 601. The orientation is rotated slightly about an axis 610, which is perpendicular to the layers 601, from one of the layers 601 to an adjacent one of the layers 601. The result is a helical structure as shown in Figure 1F where a single molecule in each layer is shown. More realistically, molecules have some translational degree of freedom within a layer and are not necessarily stacked on top of each other, in this way, from one layer to another but may rather be displaced from the axis 610. The molecules 700 form a helix 635 with a pitch length, *p*. The helix 635 has a helical axis which corresponds to the axis 610.

The lines of electrodes 101,103, which are adjacent to the volume 90 of cholesteric liquid crystal 80, are coated with polyimide (e.g. Nissan Chemicals SE-610) and rubbed to provide an in-plane molecular orientation of the molecules of the cholesteric liquid crystal 80 when no voltage is applied across the sets of electrodes. More specifically, the line of electrodes 101 is rubbed in a direction perpendicular to the optical fiber 20 whereas the line of electrodes 103 is rubbed in a parallel but opposite direction. Consequently, as shown in Figure 1E, when no voltage is applied across the sets of electrodes the helical axis 610 is perpendicular to a plane parallel to the inner surface 110 of the glass substrate 100. The result is a molecular orientation of the molecules of the cholesteric liquid crystal 80 in a plane parallel to the inner surface 110 of the glass substrate 100. This is shown in Figure 1E where the layers 601 are oriented parallel to the inner surface 110.

When an optical signal propagates through the core 30 of the optical fiber 20 the evanescent field of the optical signal penetrates a portion of the cholesteric liquid crystal 80. Preferably, the optical signal propagates in a single mode. With respect to the evanescent field that penetrates the cholesteric liquid crystal 80 the resulting index of refraction of the cholesteric liquid crystal 80 is between nₒ and nₑ, less than n_{core} and constant along direction 750. The index of refraction of the cholesteric liquid crystal 80 depends on the polarization of the evanescent field but it is nonetheless less than n_{core} and constant. Consequently, total internal reflection of the optical signal occurs within a boundary layer, at an interface between the core 30 and the cholesteric liquid crystal 80, over which the evanescent field penetrates the cholesteric liquid crystal 80. In such a case, the optical signal continues to propagate un-reflected along the optical fiber 20.

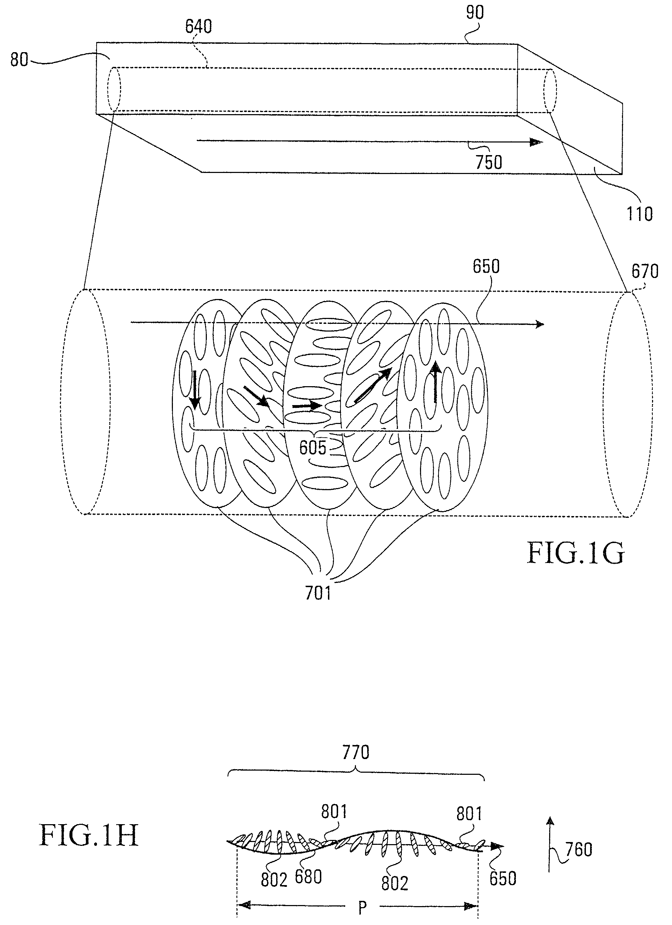

When an AC voltage is applied across the sets of electrodes, an electric field causes a portion of the cholesteric liquid crystal 80 exposed to the electric field to re-orient itself resulting in the helical axis 610 being in a plane parallel to the inner surface 110 of the glass substrate 100 and more specifically parallel to the optical fiber 20. This is illustrated in Figure 1G. An expanded view 670 of a cylindrical section 640 through the cholesteric liquid crystal 80 along the direction 750 is shown in Figure 1G. The cholesteric liquid crystal 80 includes a continuum of layers of molecules, five of which 701 are shown in the expanded view 670. In this case, the layers 701 are oriented such that a normal to the layers 701, defined by helical axis 650, is parallel to the direction 750 of propagation of an optical signal. As shown in Figure 1H, molecules 770 from the plurality of layers are stacked forming a helical structure as shown by a helix 680 with pitch length, *p*. In this case the orientation of the molecules varies periodically from 0° to 360° about the helical axis 650. Consequently, the index of refraction of the cholesteric liquid crystal 80 varies periodically between nₒ and nₑ. This results in a periodic variation in the refractive index of the cholesteric liquid crystal 80 between the ordinary and extraordinary indices of refraction nₒ and nₑ, respectively, along the length of the optical fiber 20 in the direction 750. This periodic variation in the refractive index of the cholesteric liquid crystal 80 results in a phase grating. A period, Λ, of the phase grating satisfies Λ = *p*/2 and varies with the magnitude of the applied voltage. This is illustrated in Figure 1H. As shown at 801 and 802 the molecules cycle twice through orientations perpendicular and parallel, respectively, to a direction 760 over the pitch length, *p*. The effective index of refraction of the cholesteric liquid crystal 80 therefore cycles twice through nₒ and nₑ over the pitch length, *p*. Consequently, the pitch length, *p,* corresponds to two index modulation cycles.

In a preferred embodiment of the invention, nₑ > nₒ and the cholesteric liquid crystal 80 has an extraordinary refractive index nₑ ≅ n_{core}, where n_{core} is a refractive index of the core 30 of the optical fiber 20. Preferably, nₑ is slightly lower than n_{core} both when the applied voltage is either on or off. However, an electric field within the cholesteric liquid crystal 80 from the applied voltage increases the refractive index of the cholesteric liquid crystal 80 slightly and hence makes it approach closer to the value of the refractive index of the core 30 of the optical fiber 20. This action enhances the extent to which the component of the evanescent field of the optical signal from the core 30 of the optical fiber 20 is perturbed by the phase grating. In this way, perturbations are achieved with the phase grating located adjacent to the core 30 of the optical fiber 20 through which the optical signal propagates.

In other embodiments, nₒ > nₑ and nₒ ≅ n_{core}. In such embodiments, preferably, nₒ is slightly lower than n_{core} both when the applied voltage is either on or off.

Perturbations in the evanescent field of the optical signal caused by the phase grating result in reflection of a portion of the optical signal centered about a center wavelength, λ₁, that satisfies the Bragg condition λ₁=2n_{eff}Λ₁, where n_{eff} is an effective refractive index of the media through which the optical signal propagates and Λ₁ = *p*/2. The media through which the optical signal propagates consists of, for example, the core 30 and boundary layers of the cladding 40 and cholesteric liquid crystal 80 through which the evanescent field penetrates. More particularly, perturbations in the evanescent field of the optical signal in fact result in reflection of a number of wavelengths of the optical signal centered about the center wavelength, λ₁.

The magnitude of the grating induced reflection in the core 30 of the optical fiber depends on the length of the grating over which the reflection occurs. In addition, different portions of the phase grating may have different periods. The length of a portion of the phase grating having a specific period is controlled by the length, ℓ, of the electrodes and/or the number of the sets of electrodes across which a specific AC voltage is applied. For example a phase grating, in which a portion of it has a period Λ₁ and length 3ℓ, is obtained by applying a specific AC voltage across three consecutive sets of electrodes. Similarly, another portion of the phase grating of length 2ℓ and period Λ₂ is obtained by applying a different AC voltage across two other consecutive sets of electrodes. Both the length and period of portions of the phase grating may be controlled dynamically by controlling the voltage across the sets of electrodes.

The period of the phase grating controls the center wavelength at which a portion of the optical signal is reflected. The period of the phase grating is tuned by controlling the magnitude of the applied AC voltage. This is because the pitch of the helical structure is a function of the magnitude of the applied voltage.

In other embodiments of the invention, the cholesteric liquid crystal 80 of Figures 1A, 1B and 1C is replaced by any suitable material with a structure that results in a tunable periodic variation in its index of refraction.

Any suitable system, method or device may be used to control the AC voltages applied to the sets of electrodes either statically or dynamically. A very simple example of a control system is shown in Figure 1D in which a controller 600 is shown having individual control outputs (collectively 605) to the each one of the electrodes of the line of electrode 101 and preferably also to the electrodes of the line of electrodes 103 (not shown). The controller 600 is connected to a power source such as a voltage source 615. The controller 600 has an input 620 consisting of channel selections for attenuation and/or reflection and levels of attenuation and/or reflection, respectively, for each one of the channel selections. Input 620 may be remotely generated or it may be locally selectable. The controller 600 uses the input 620 to determine what voltages, if any, must be applied across the sets of electrodes and performs necessary conversions of a voltage supplied by the voltage source 615 to the AC voltages supplied across the sets of electrodes. The controller 600 is calibrated for wavelength of reflection and reflected power. More specifically, the controller 600 is calibrated to determine the magnitude of an applied AC voltage (or equivalently, the required period of the phase grating) as a function of center wavelength required to reflect channels of an optical signal. The controller 600 is also calibrated to determine the fraction of power of any channel of an optical signal that is reflected as a function of the number of electrodes (or equivalently, the length of a portion of the phase grating having the required period) over which a respective AC voltage is applied.

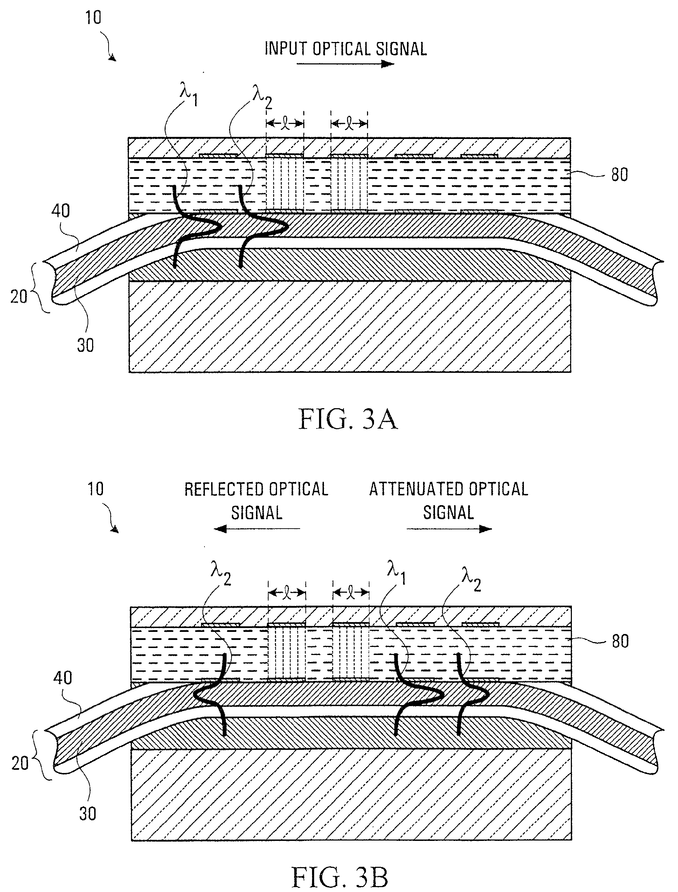

Referring to Figures 3A and 3B, shown are side sectional views of the wavelength tunable reflector 10 of Figure 1A illustrating wavelength selectivity and reflectivity before and after reflection, respectively, of a selected channel of an input optical signal. As shown in Figure 3A, an input optical signal with two channels having center wavelengths λ₁ and λ₂, respectively, propagates along the optical fiber 20. The input optical signal is mainly confined to the core 30 except for a component of its evanescent field extending into the cladding 40 and into the cholesteric liquid crystal 80. When an AC voltage is applied across a number of sets of electrodes, a phase grating with a period, Λ₁, is created in a portion of the cholesteric liquid crystal 80 where the AC voltage is applied. The period satisfies *p* = 2Λ₁ where *p* is the pitch length. The magnitude of the AC voltage is tuned such that, for the channel of center wavelength, λ₁, of the input optical signal, the period, Λ₁, satisfies the Bragg condition λ₁=2n_{eff}Λ₁. Consequently, a portion of the channel of center wavelength, λ₁, of the input optical signal is reflected and a remaining portion of the channel of center wavelength, λ₁, continues to propagate un-reflected along the optical fiber 20. On the other hand, the channel of center wavelength, λ₂, of the optical signal does not satisfy the Bragg condition and continues to travel down the optical fiber 20 unaffected. As shown in Figure 3B, a reflected optical signal with a channel of center wavelength, λ₁, propagates in a direction opposite the direction of propagation of the input optical signal and an attenuated optical signal with channels of center wavelength λ₁ and λ₂, respectively, propagates in the direction of the input optical signal. The power of the reflected optical signal depends upon the length of the portion of the cholesteric liquid crystal 80 that has the required period. Any chosen wavelength to be reflected is controlled by applying an appropriate AC voltage to one or more of the sets electrodes. In other embodiments, M channels of an input optical signal each having a center wavelength λᵢ (i=1 to M) are reflected. In such embodiments, for each channels of the input optical signal, an appropriate AC voltage is applied to one or more of the sets of electrodes resulting in a respective portion of a phase grating having a period Λᵢ that satisfies the Bragg condition λᵢ=2n_{eff}Λᵢ. The extent to which the channels of the input optical signal are reflected is determined by the length, ℓ, of the sets of electrodes and the number of sets of electrodes across which a respective one of the AC voltages is applied.

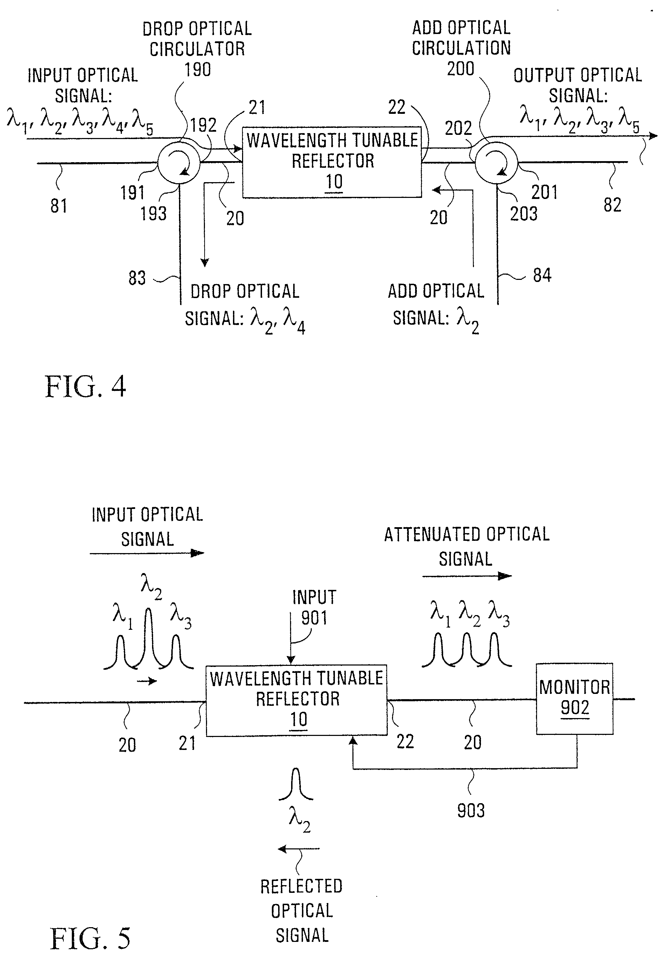

Referring to Figure 4, shown is a wavelength selective add/drop multiplexer (WSADM). The WSADM is used to dynamically re-configure fiber optical communication networks for adding channels and/or dropping channels. In the preferred embodiment of Figure 4, a drop optical circulator 190 has three ports 191,192,193. An input optical fiber 81 is connected to port 191; an add optical fiber 83 is connected to port 193 and port 192 is connected to the optical fiber 20 through the input 21 of the wavelength tunable reflector 10. An add optical circulator 200 also has three ports 201,202,203. An output optical fiber 82 is connected to port 201; a drop optical fiber 84 is connected to port 203 and port 202 is connected to the optical fiber 20 through the output 22 of the wavelength tunable reflector 10. The wavelength tunable reflector 10 of Figure 4 functions as a multiple wavelength selective reflector.

Channels input at input optical fiber 81 that are reflected by the wavelength tunable reflector 10 are dropped to drop optical fiber 83 by drop optical circulator 190 and non-reflected channels are output through output optical fiber 82. Channels input at optical fiber 84 are circulated into the wavelength tunable reflector 10 by add optical circulator 200 and reflected back through optical fiber 82.

As an illustrative example, shown in Figure 4, is an input optical signal having five channels of center wavelengths λ₁, λ₂, λ₃, λ₄ and λ₅ and propagating through the input optical fiber 81 and into the drop optical circulator 190 at port 191. The input optical signal is circulated out through to port 192 into the optical fiber 20 and into wavelength tunable reflector 10. AC voltages suitable for reflection of the channels of the input optical signal having center wavelengths λ₂ and λ₄ are applied to at least two of the sets of electrodes, resulting in the channels of the input optical signal having center wavelengths λ₂ and λ₄ being reflected and propagating back into the optical circulator 190 at port 192. The channels of the input optical signal having center wavelengths λ₂ and λ₄ are then circulated out through port 193 of the drop optical circulator 190, effectively being dropped from the input optical signal and resulting in a drop optical signal having channels of center wavelengths λ₂ and λ₄ propagating through the drop optical fiber 83. An add optical signal with a channel of center wavelength λ₂ propagates through the add optical fiber 84 into the add optical circulator 200 at port 203 and is circulated out through port 202 into the optical fiber 20. The add optical signal then propagates into the wavelength tunable reflector 10, at output 22, where it is reflected. After being reflected, the channel of center wavelength λ₂ of the add optical signal propagates in a same direction as the input optical signal and back through the output 22 resulting in an effective coupling of the input and add optical signals into an output optical having center wavelengths λ₁, λ₂, λ₃ and λ₅. The output optical signal propagates into port 202 of the add optical circulator 200 where it is circulated out through port 201 and into the output optical fiber 82.

Embodiments of the invention are not limited to the illustrative example of Figure 3. In another embodiment of the invention an input optical signal has M channels of center wavelengths λᵢ (where i=1 to M) and channels of any subset of one or more channels of the input optical signal are reflected and dropped out through the drop optical circulator 190 into the drop optical fiber 83 as a drop optical signal. In addition, the add optical signal has one or more channels each having a specific center wavelength that may or may not correspond to one of the wavelengths of the channels of the input optical signal.

The number of different AC voltages applied across the sets of electrodes determines the number of channels that can be added and/or dropped simultaneously. In the illustrative example of Figure 4, the two channels being dropped have center wavelengths λ₂ and λ₄ and the channel being added has center wavelength λ₂ for a total of two distinct center wavelengths. Preferably, in embodiments of the invention the number of distinct AC voltages applied across the sets of electrodes corresponds to the number of distinct center wavelengths of channels either being added or dropped.

Referring to Figure 5 shown is a wavelength selective variable optical attenuator (WSVOA) provided by an embodiment of the invention. The WSVOA includes the wavelength tunable reflector 10. Functioning as a wavelength selective variable optical attenuator, it 10 can be used to dynamically adjust the power level of channels of an optical signal with individual wavelengths travelling down a waveguide or optical fiber. The WSVOA is very useful especially in optical communications to equalize the power level of the optical channels of an optical signal after different stages of signal processing. Alternatively, it may be also be useful to set the power level of channels of an optical signal to specific levels to compensate for channel (wavelength) dependent losses elsewhere within an optical network.

Shown in Figure 5 is an illustrative example of the wavelength tunable reflector used as a WSVOA. In Figure 5, an input optical signal with channels of center wavelengths λ₁, λ₂ and λ₃ propagates along the optical fiber 20 and into the wavelength tunable reflector 10 at input 21. At input 21 the power level of the channel of center wavelength λ₂ is greater than that the power level of the other channels of center wavelengths λ₁ and λ₃. A voltage, inducing a change in the phase grating to match the Bragg condition for center wavelength λ₂, is applied to one or more sets of electrodes resulting an attenuated optical signal that has channels of center wavelengths λ₁, λ₂ and λ₃ with equal power levels. In other embodiments of the invention, an optical signal with M channels of center wavelengths λᵢ (i=1 to M) each having a power level which may be different from one channel to another. Each one of the M channels of the optical signal may be attenuated to a desired power level by applying a specific AC voltage to at least one set of electrodes.

To control the wavelength tunable reflector 10 and, more particularly, to control the AC voltages applied across the sets of electrodes, a system input 901 may be used and/or a monitor 902 may be provided downstream (closed loop control) or upstream (open loop control, not shown) from the wavelength tunable reflector 10 to measure light intensity of different channels and produce control signals 903.

In other embodiments of the invention, the wavelength tunable reflector 10 is used to build broadband spectrum equalization filters or gain flattening filters for optical amplifiers. By applying respective AC voltages across the sets of electrodes, the power levels of multiple channels, having specific center wavelengths, of an optical signal can be controlled. Any broadband spectra or uneven gain curves, such as those of erbium doped optical amplifiers, can be flattened either statically or dynamically. That is, in the case of gain flattening filters, the power levels of channels of an amplified optical signal is flattened either statically or dynamically.

In some embodiments, the wavelength tunable reflector 10 can be used to provide re-configurable dispersion compensators for optical communication networks. By applying AC ramp voltages across the sets of electrodes in a manner that the magnitude of the AC voltages along the lines of electrodes 101,103 varies either linearly or non-linearly, one can produce a monotonic variation in the pitch length of the helical structure. The result is a chirped phase grating. The ramp voltages are used to control a slope, length and non-linearity of the chirped phase grating to compensate for different amounts of first order and higher order dispersions in optical communication networks.

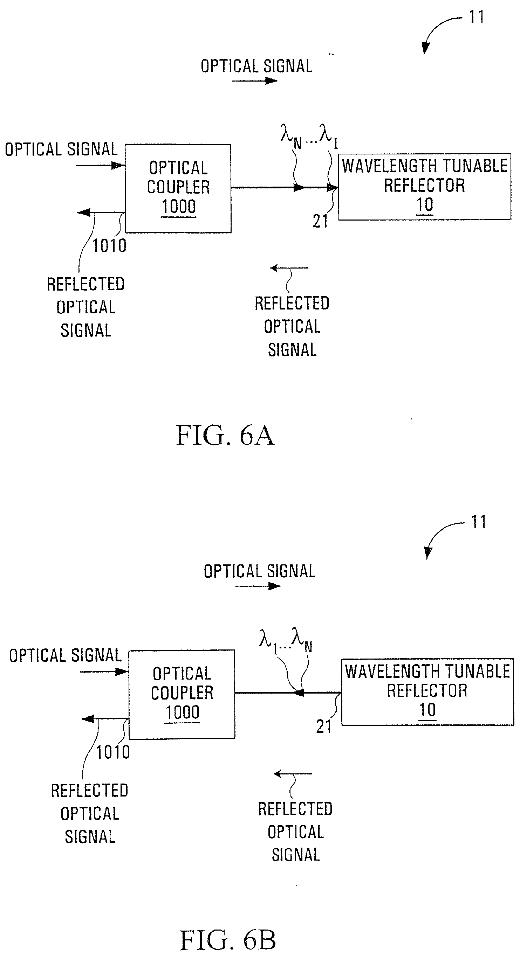

Referring to Figure 6A is a block diagram of a RDC (Re-configurable Dispersion Compensator) showing an illustrative example of an optical signal with dispersion propagating into the re-configurable dispersion compensator, provided by an embodiment of the invention. The RDC is generally indicated by 11. An optical coupler 1000 is connected to the wavelength tunable reflector 10 of Figure 1A at input 21. An optical signal carrying a waveform, which can be any suitable waveform such as a square wave, propagates though the optical coupler 1000. The waveform is slightly distorted due to dispersion effects and due to these dispersion effects, as shown in Figure 6A, N Fourier components λ₁,λ₂, ...,λ_{N} of the waveform (only λ₁ and λ_{N} are shown) enter sequentially, in time, into the wavelength tunable reflector 10 at input 21 with the component λ₁ entering first and the component λ_{N} entering last. Each Fourier component propagates specific a length into the wavelength tunable reflector 10 before being reflected back out input 21. As shown in Figure 6B, a chirped phase grating is set up such that while each Fourier component performs a round trip through the wavelength tunable reflector 10 they exit at input 21 in synchronization. This is achieved by having each Fourier component travels through a specific optical path length that is controlled by the slope, length and non-linearity of the chirped grating. A resulting reflected optical with a dispersion corrected waveform then propagates into the optical coupler 1000 and is output at an output 1010. In other embodiments of the invention, the wavelength tunable reflector 10 (re-configurable dispersion compensator 11) may be configured to pre-compensate for dispersion effects anticipated further past output 1010 in which case the Fourier components λ₁,λ₂, ...,λ_{N} exit the wavelength tunable reflector 10 in manner that, for example, Fourier component, λ_{N}, exits first and Fourier component, λ₁, exits last.

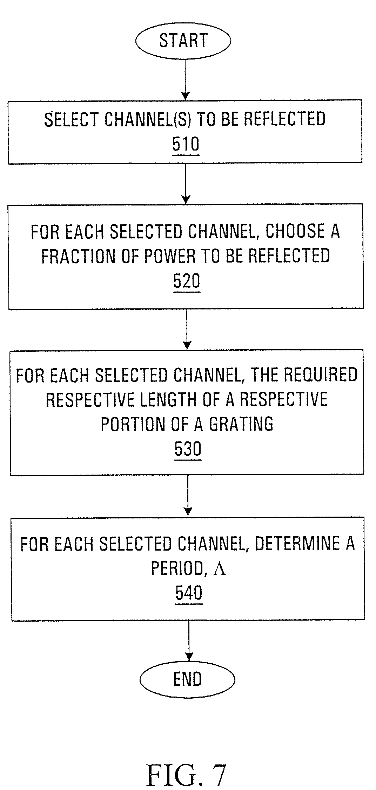

Shown in Figure 7 is a flow chart of a method of using a wavelength tunable reflector. The first step 510 consists of selecting the channels of an optical signal to be reflected. There can be one or more channels selected and each channel has a specific center wavelength, λᵢ. At step 520, for each one of the selected channels, a fraction of the power of the selected channel is chosen for reflection. At step 530, for each one of the selected channels of the optical signal, the length of a respective portion of a grating is determined to obtain the chosen fraction of the power of the selected channel. In some embodiments of the invention, step 530 includes, for each one of the selected channels of the optical signal, choosing a plurality of sets of electrodes across which an AC voltage is applied to reflect the respective selected channel of the optical signal. At step 540, for each one of the selected channels of the optical signal, a period, Λᵢ, of the respective portion of the grating is determined. Preferably, for each one of the selected channels, the period, Λᵢ, of the respective portion of the grating satisfies the Bragg condition, λᵢ=2n_{eff}Λᵢ.

In another embodiment of the invention, the period of the phase grating is tuned by changing the temperature of the cholesteric liquid crystal 80. This can be achieved by heat generated, through convection, from small heating elements located close to the cholesteric liquid crystal 80. It can also be activated by heat generated, through irradiation, by absorption of light that is sent through the cholesteric liquid crystal 80 when a light absorbing agent, such as a dye, is mixed in with the cholesteric liquid crystal 80.

Numerous modifications and variations of the present invention are possible in light of the above teachings. It is therefore to be understood that within the scope of the appended claims, the invention may be practiced otherwise than as specifically described herein.

## Claims

1. A wavelength tunable reflector (10) comprising:
an optical transmission medium (OTM) (20); and
a birefringent material (80) juxtaposed to a portion of the OTM (20) so as to allow an evansecent field of an optical signal to interact with the birefringent material (80), the birefringent material (80) having a tunable periodic variation in a refractive index in at least one portion of the birefringent material (80), the periodic variation forming a respective grating within each said at least one portion of the birefringent material (80).

2. A wavelength tunable reflector (10) according to claim 1 wherein each said respective grating has a period Λᵢ substantially satisfying a Bragg condition λᵢ = 2n_{eff} Λᵢ wherein n_{eff} is an effective refractive index, and each said respective grating is adapted to cause at least partial reflection of any portion of the optical signal having a center wavelength λᵢ.

3. A wavelength tunable reflector (10) according to any one of claims 1 to 2 wherein the OTM (20) comprises a core (30) with a refractive index, n_{core}, and wherein the birefringent material (80) has an extraordinary refractive index, nₑ, and an ordinary refractive index, nₒ, wherein a larger one of nₒ and nₑ is approximately equal to, but slightly less than n_{core}.

4. A wavelength tunable reflector (10) according to any one of claims 1 to 3 wherein each grating is a phase grating.

5. A wavelength tunable reflector (10) according to any one of claims 1 to 4 wherein the birefringent material (80) is a cholesteric liquid crystal with a helical structure.

6. A wavelength tunable reflector (10) according to any one of claims 1 to 5 comprising electrode means for applying a respective voltage across each said at least one portion of the birefringent material (80) so as to tune the respective grating.

7. A wavelength tunable reflector (10) according to any one of claims 1 to 6 comprising a controller (600) adapted to control the periodic variation of each said respective grating.

8. A wavelength selective add/drop multiplexer (WSADM) comprising the wavelength tunable reflector (10) of claim 2, wherein the wavelength tunable reflector (10) comprises an input (21) and an output (22), the wavelength tunable reflector (10) being adapted to receive the optical signal at the input (21) and allow a channel of the optical signal to be dropped by reflecting the channel and being adapted to allow another channel to be added to the optical signal by receiving the channel to be added at the output (22) and reflecting the channel to be added, the WSADM further comprising:
means at the input (21) for directing, to a port (193), the channel of the optical signal to be dropped; and
means at the output (22) for directing the channel to be to added into the wavelength tunable reflector (10).

9. A wavelength tunable reflector (10) according to claim 2 adapted to function as a wavelength selective variable optical attenuator, wherein the length of each said respective grating is adjusted to control the extent to which the any portion of the optical signal is reflected, thereby controlling attenuation of an un-reflected portion of the optical signal.

10. A broadband spectrum equalization filter (BSEF) comprising the wavelength tunable reflector (10) of any one of claims 1 to 7.

11. A gain flattening filter (GFF) comprising the BSEF of claim 10 adapted to equalize a gain profile of an optical amplifier.

12. A re-configurable dispersion compensator (RDC) (11) comprising the wavelength tunable reflector (10) of any one of claims 1 to 7 and applied to an optical signal carrying a waveform having Fourier components, wherein the wavelength tunable reflector (10) is adapted to reflect the Fourier components at different points along the wavelength tunable reflector (10) resulting in a reflected optical signal having a dispersion corrected waveform with Fourier components that exit the wavelength tunable reflector (10) approximately simultaneously or exit the wavelength tunable reflector (10) sequentially in time in a manner to pre-compensate for anticipated dispersion effects, the RDC (11) further comprising:
means for receiving the optical signal and directing the optical signal into the wavelength tunable reflector (10) and directing the reflected optical signal from the wavelength tunable reflector (10) to an output (1010).

13. A method of designing the wavelength tunable reflector (10) of claim 2, the method comprising:
selecting at least one of one or more channels of the optical signal for reflection, wherein each channel has an associated one of the center wavelengths, λᵢ;
selecting, for each one of the selected channels of the optical signal, a fraction of power of the selected channel that is to be reflected;
determining, for each one of the selected channels of the optical signal, the length of the respective grating required to reflect the selected fraction of power of the selected channel;
determining, for each one of the channels of the optical signal, the period, Λᵢ, of the respective grating.

14. A method of reflecting a channel of an optical signal having a plurality of channels of respective center wavelengths, the method comprising:
juxtaposing a portion of an OTM (20) to a birefringent material (80) in a manner such that an evanescent field of the optical signal is coupled to the birefringent material (80), the birefringent material (80) having a tunable periodic variation in a refractive index that forms a tunable grating that allows the channel of the optical signal propagating through the OTM (20) to be reflected; and
tuning the tunable grating so as to control the extent to which the channel of the optical signal is reflected.

15. A method according to claim 14 wherein the tuning the tunable grating comprises matching, at periodic intervals, a greater one of an extraordinary index of refraction, nₑ, and an ordinary index of refraction, nₒ, of the birefringent material (80) with an index of refraction, n_{core}, of a core (30) of the OTM (20), thereby forming the tunable grating.
